# EUROPEAN PATENT SPECIFICATION

(11) **EP 1 611 764 B1**
(45) Date of publication and mention of the grant of the patent: **02.05.2007**
(21) Application number: 04723275.6
(22) Date of filing: 25.03.2004
(51) Int. Cl.: H04Q 7/38

(54) **MULTIPLE REGISTRATION OF A SUBSCRIBER IN A MOBILE COMMUNICATION SYSTEM**
MEHRFACHE REGISTRIERUNG EINES TEILNEHMERS IN EINEM MOBILEN KOMMUNIKATIONSSYSTEM
INSCRIPTION MULTIPLE D'UN ABONNE DANS UN SYSTEME DE COMMUNICATIONS MOBILES

(30) Priority: 04.04.2003 GB 0307853
(43) Date of publication of application: 04.01.2006
(73) Proprietor: Nokia Corporation, 02150 Espoo (FI)
(72) Inventor: BAJKO, Gabor, San Diego, CA, 92131 (US); JARO, Gabor, H-1162 Budapest (HU); VARGA, József, H-7985 Nagydobsza (HU)
(74) Representative: Ruuskanen, Juha-Pekka
(86) International application number: PCT/IB2004/001043
(87) International publication number: WO 2004/089022

(56) References cited:
- WO-A-01/91419
- WO-A-02/091785
- WO-A-03/005669

## Description

### Field of the Invention

The present invention relates to a communication system, and in particular to a communication system wherein a subscription is allowed to have multiple registrations to control means of the system.

### Background of the Invention

A communication system can be seen as a facility that enables communication between two or more entities such as user equipment and/or other nodes associated with the system. The communication may comprise, for example, communication of voice, data, multimedia and so on.

A communication system typically operates in accordance with a given standard or specification which sets out what the various elements of the system are permitted to do and how that should be achieved. For example, the standard or specification may define if the user, or more precisely, user equipment or terminal is provided with a circuit switched service and/or a packet switched service. Communication protocols and/or parameters which shall be used for the connection may also be defined. In other words, a specific set of "rules" on which the communication can be based on needs to be defined to enable communication by means of the system.

Communication systems proving wireless communication for user equipment or other types of terminating nodes are known. An example of the wireless systems is a cellular network. In cellular systems, a base transceiver station (BTS) or similar access entity serves user equipment (UE) via a wireless interface between these entities. The mobile user equipment is typically referenced by the term mobile station (MS). Communications in the system can be controlled by one or several control entities. The various control entities may be interconnected. One or more gateway nodes may also be provided for connecting the cellular network to other networks, such as to another cellular system or to a public switched telephone network (PSTN) and/or other communication networks such as an IP (Internet Protocol) and/or other packet switched networks. The communication between the user equipment and the entities of the communication network can be based on an appropriate communication protocol. An example of the protocols is the session initiation protocol (SIP).

The communication systems have developed in the direction wherein various service provision functions of the network are handled by network entities known as servers. For example, in the current third generation (3G) wireless multimedia network architectures it is assumed that several different servers are used for handling different functions. These include functions such as the call state control functions (CSCFs). The call state control functions may be divided into various categories such as a proxy call state control function (P-CSCF), interrogating call state control function (I-CSCF), and serving call state control function (S-CSCF). It shall be appreciated that sometimes the CSCFs may be referenced to as the call session control functions.

The serving call state control function forms the entity the subscriber needs to be registered at in order to be able to request for a service from the communication system. In addition to the serving control entity, the user may need to be associated with proxy and interrogating control entities.
A user may have more than one registration at the same time. At least one registration is required for the user to be able to communicate via the communication system. During registration proceedings various authentication queries or messages and authentication parameters such as those based on authentication quintets and/or keys may need to be transferred between the entities involved in the process.

Typically a registration means that a user registers an identity at the serving call state control function. During the registration procedure an identity such as a public identity (ID) is provided for the controller entity. The public ID is an identity that associates with the subscription to the communication system. The public identity may function as a telephone number of the known telephone systems. However, while a conventional telephone such as a 2^{nd} generation (2G) mobile phone can only have one number, e.g. a 3G phone may have more than one identity (e.g. a telephone number, one or more email-like addresses, for example session initiation protocol (SIP) universal resource locators (URL), an address or addresses for alternative communications means, and so on).

A subscription may also have at least one associated private identity. The private identity may refer to a particular user of a subscription. That is, a subscription may have more than one user. The user, may be seen as logically equalling an identity entity such as any appropriate subscriber identity module (SIM).

A subscription may associate with various identities and users. For example, it is possible that a family or organisation (such as a an office) has a common public identity. In addition to that, all members of the group may have further public identities and private identities.

In the 3G communication systems a user who wants to initiate a call or receive a call the user must register his/hers public ID. If a user has two public IDs (e.g. ID1 and ID2) and only ID1 is registered, all calls initiated to/from ID2 will be unsuccessful since ID2 has not been registered with the network.

The current registration procedures such as those specified by the 3^{rd} generation partnership project (3GPP) register public IDs for a user separately and independently, save those public IDs that belong to the same service profile. It has been proposed that all user identities of a particular subscriber shall be registered in a call controller entity. For example, release 5 (Rel5) version of a 3GPP standard document proposes that all those identities are registered in the same serving call state control function (S-CSCF) entity.

The S-CSCF entity is aware of the registration status only in the level of individual public lDs, and therefore it cannot know if a user has more than one registration and if the user is registered in more that one control entity.

As mentioned above, in some communication standards such as, for example, in the 3GPP Rel5 based communication systems, all public identities that belong to the same IP multimedia subsystem (IMS) subscriber have to be registered to the same controller entity. However, at the same time any registration, re-registration and de-registration proceeding are done on a one-by-one basis. Since the registration of individual public IDs is handled independently, it may happen that a user is registered to at least two S-CSCFs. This may not be allowed in all applications. For example, if the public ID such as public user identities (IMPUs) are registered to different S-CSCFs then it may be impossible to execute some services (e.g. forking).

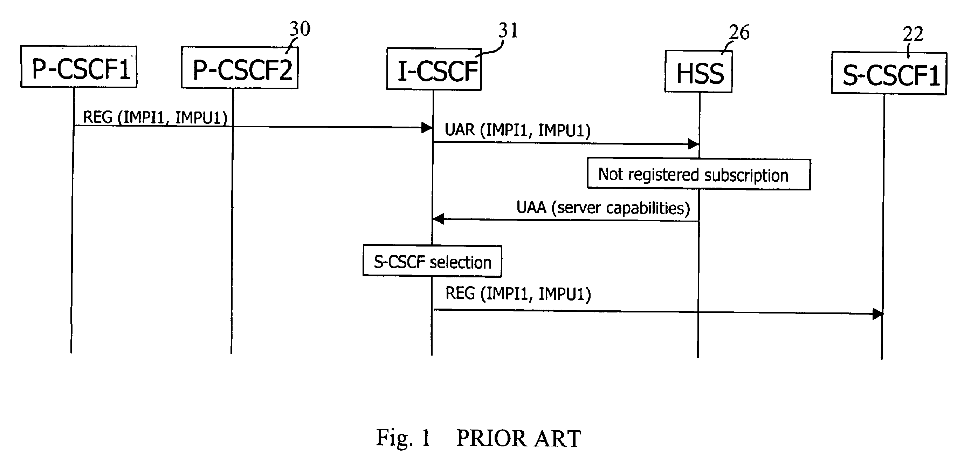

As shown in Figure 1, in the 3G the S-CSCF selection is typically done in the I-CSCF during registration. The I-CSCF, however, cannot know if the user is registered in any other S-CSCFs. Thus it is possible that the independent registrations of the same subscription are forwarded to different S-CSCFs based on the server capability information received by the I-CSCF from the home subscriber server (HSS).

A solution to the problem of multiple registrations is disclosed in an International application, publication no. WO 02/091785. This earlier patent application describes an embodiment wherein the I-CSCF is configured to decide whether newly registered identities are being addressed to a different S-CSCF than the one where earlier registration took place. If so, the old registrations are then moved to the new S-CSCF. Although the solution is believed to be viable, there is still a need for an alternative solution.

Furthermore, WO 02/091785 does not address the problem of having different types of identities and/or multiple private identities. For example, a subscription may have a plurality of private user identities (IMPI) and a plurality of public identities.

WO 03/005669 discloses a method for supporting multiple registrations from the same user requested from different terminals in a telecommunication system. Information relating to the location of said user and related to the plurality of identifiers that identify said user is managed in said system.

It shall be appreciated that although the above discussed the registration proceedings and related problems with reference to an internet protocol (IP) based third generation (3G) communication system and session initiation protocol (SIP), similar disadvantages may be associated with other systems as well and thus the description is not limited to these examples.

### Summary of the Invention

Embodiments of the present invention aim to address one or several of the above problems.

According to one aspect of the present invention, there is provided method in a communication system wherein a subscription is associated with a plurality of public and private identities, the method comprising:
storing in a user information storage information of relations between the plurality of public and private identities and of a control entity in which at least one of the identities is registered; and
allocating the control entity to a further registration based on the information stored in the user information storage,
characterised by the step of recognising at the user information storage that different private identities associate with a common service profile.

According to another aspect of the present invention there is provided a communication system comprising a plurality of control entities and a user information storage configured for storing information of relations between public and private identities associated with users of the communication system and of a control entity in which at least one of the public and private identities is registered, and means for allocating a call control entity to a further registration associated with a user based on the information stored in the user information storage, characterised by recognising means for recognising at the user information storage that different private identities associate with a common service profile.

According to still another aspect of the present invention there is provided a user information storage entity for a communication system, the user information storage entity comprising means for storing information of relations between public and private identities associated with users of the communication system and of a control entity in which at least one of the public and private identities is registered, and means for allocating the call control entity to a further registration associated with a user based on the information stored in the user information storage characterised by recognising means for recognising at the user information storage that different private identities associate with a common service profile.

In a more specific embodiment a further control entity queries for the registration status of the user from the user information storage, the query being responded by returning information enabling routing of a registration request to the control entity. The control entity may comprise a servicing call state control function and the further entity may comprise an interrogating call state control function. The user information storage may comprise a home subscriber server.

The information enabling routing to the control entity may comprise the name or the address of the control entity.

The user information storage may be configured to select the control entity to be allocated for the further registration.

The embodiments may provide various advantages. All identities associated with a subscription may be registered to a single call state control function. The services may work in a normal manner and independently of the identity used by the subscription. In some embodiments it can be ensured that the private and public identities associated with a subscription are registered to the same servicing call control function. Some embodiments may enable provision of the same service for different identities in a similar manner.

### Brief Description of Drawings

For better understanding of the present invention, reference will now be made by way of example to the accompanying drawings in which:
Figure 1 shows information flows in an prior art arrangement;
Figure 2 shows a part of a communication system wherein the present invention can be embodied;
Figure 3 shows information flows in accordance with an embodiment of the present invention; and
Figure 4 shows possible user identity relationships for a user.

### Description of Preferred Embodiments of the Invention

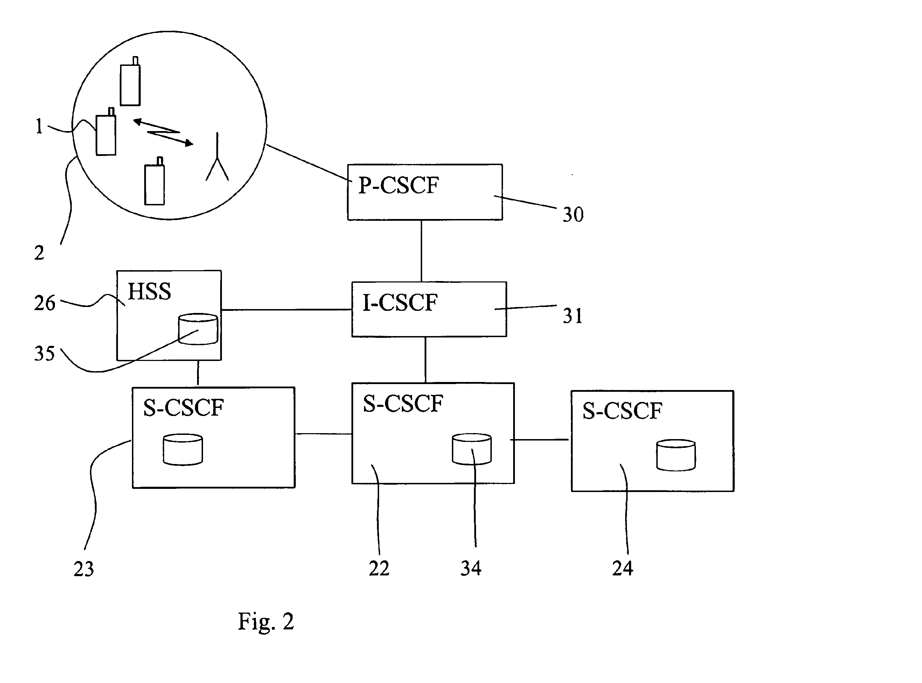

In the following embodiments of the invention are described with reference to an exemplifying mobile communication system of Figure 2 that is arranged in accordance with the 3G specifications. The mobile communication system is arranged to serve a plurality of mobile user equipment 1 via a wireless interface. The basic operational principles of mobile user equipment, that may also be referenced to as mobile stations, are known by the skilled person, and will thus not be explained in any more detail here.

A mobile communication system can typically be divided between a radio access network (RAN) and a core network (CN). A plurality of user equipment 1 of mobile users is served by a 3G radio access network (RAN) over a wireless interface. The user equipment is enabled to move relative to the access entity, and may thus be referred to by the term mobile station. It shall be appreciated that although Figure 2 shows only one radio access network for clarity reasons, a typical communication network system comprises a number of radio access networks. The 3G radio access network (RAN) is connected to appropriate core network entity or entities, such as to a serving general packet radio service support node (SGSN). The operation of a typical mobile communication network and the various entities thereof is known by the skilled person and will thus not be explained in more detail here.

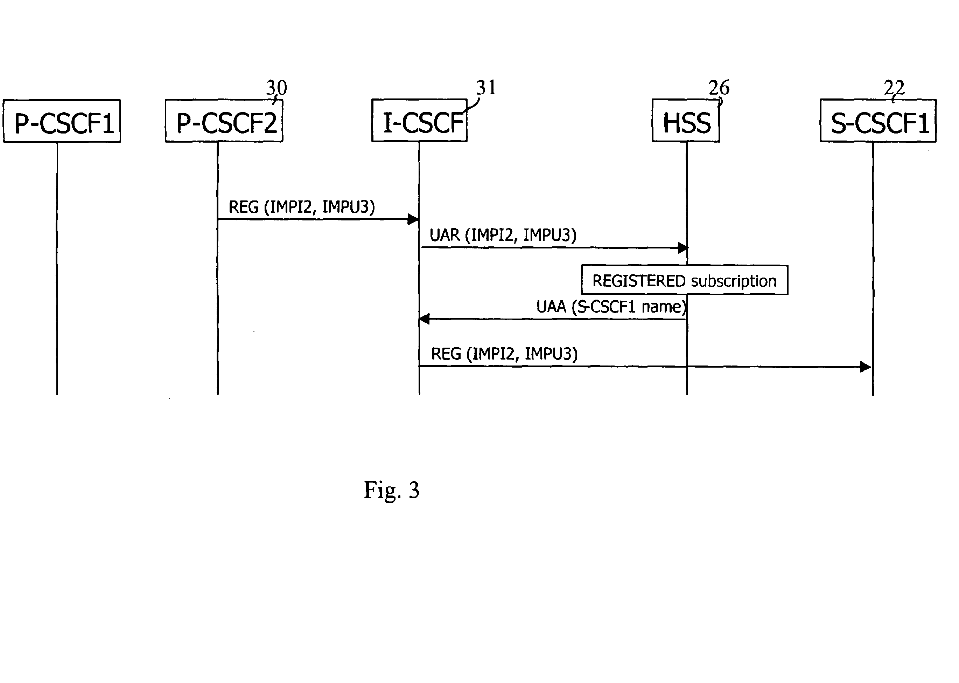

Figure 2 shows also a plurality of call state control function entities (CSCFs) 22 to 24, 30 and 31. From these the call state control function entity 22 is the so called serving call state control function (S-CSCF) with which the user equipment 1 has at least one registration. That is, the user has registered at least one identity with the control entity 22. Thus the control entity 22 is currently serving said user equipment 1 and is in control of the status of said user equipment. Call state control function entities 23 and 24 could also provide similar functionality, should an identity of the user be registered with either of them. The functions the proxy CSCF 30 and the interrogating CSCF 31 will described below with reference also to the signalling flowchart of Figure 3.

A user information storage 26 is also shown. More particularly, the user information storage is shown to be provided by means of a home subscriber server (HSS). In accordance with the principles of the present invention the HSS is configured to store information of identities of the user and of a call control entity in which the user is registered. Information of possible relations between identities of different users may also be stored at the home subscriber server (HSS) 26. The home subscriber server (HSS) 26 may also store information such as the status of the registration identities (ID) (currently-registered-with a S-CSCF or currently-not-registered) and further similar information associated with the use of the communication system.

Control entity and status information may be saved in the storage means 35 of the user information storage 26 during registration. The stored information can be updated during re-registration and/or de-registration.

The home subscriber server (HSS) can be queried by the control entities, e.g. during registration and session set-up procedures. It shall be appreciated that the term "session" refers to any communication a user may have such as to a call, data (e.g. web browsing) or multimedia communication and so on.

In below described embodiment individual identity (ID) registrations for a subscription are synchronised in a 3GPP IMS (IP Multimedia Subsystem) domain by means of the HSS. In a preferred embodiment the HSS keeps a record of the relations between various identities associated with the subscription. The HSS also maintains information regarding identities that are registered to the S-CSCFs. In case of registration of a further identity related to an already existing registration, the same S-CSCF can be allocated for this registration by providing appropriate routing information such as the name and/or address of the S-CSCF.

Based on the information of the relations between various identities, the HSS may detect e.g. in the case of an initial registration of, for example, a public user identity (IMPU) whether any identities of the same user or subscription has already been registered. As shown in Figure 3, in the case of an existing registration the HSS shall return the S-CSCF name in the response given for the user registration status query, instead of returning the server capabilities as is done in the prior art.

For example, such a response may be given for a user registration status query (UAR) that has been initiated by an I-CSCF. The I-CSCF may then forward the register message to the S-CSCF which name or address received in the response (UAA).

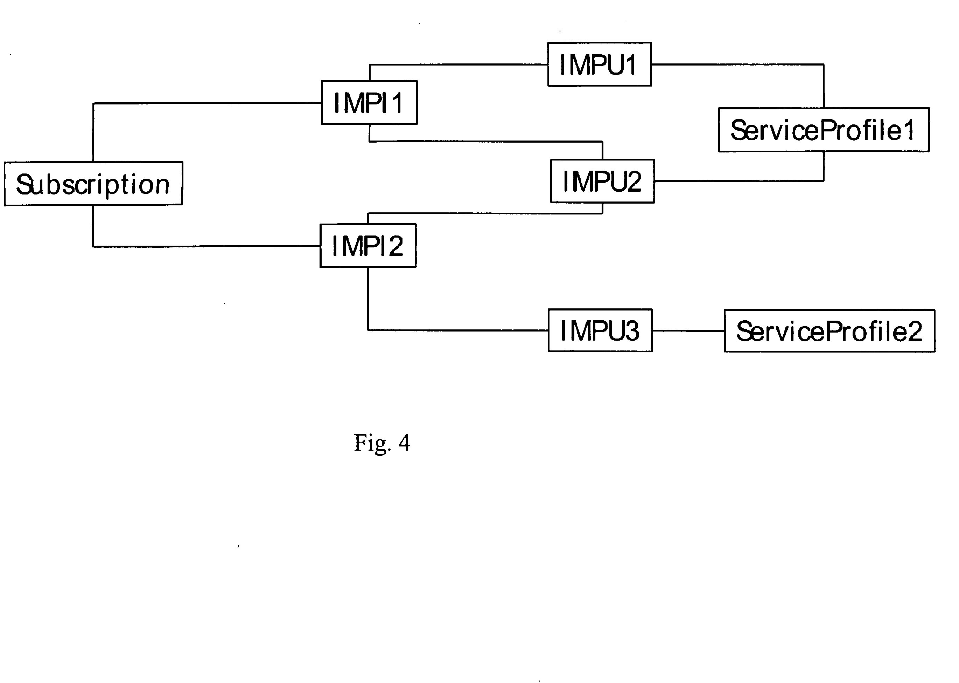

As explained a subscription may a plurality of public and private identities. The are shown as IMPUs and IMPIs, respectively, in Figure 4 which is an example of such Subscription-IMPI-IMPU-SP relations. The private identities IMP11 and IMP12 may be provided by two separate subscriber identity modules (SIM) or similar user identity modules associated with the user equipment. For example, in the 3GPP these identity modules are referenced as USIMs.

Since IMPIs can be stored on separate SIM cards and/or in separate user equipment, the HSS may not be able to forward registration from these user equipment to the same S-CSCF. However, the HSS can be provided with information regarding a common feature that refers to common services.

The HSS may track the relation between the IMPIs e.g. based on either at least one common public identity (IMPU) or common service profile (SP) or common subscription behind the private identities. Based on the relations the HSS can recognise that the same services should be provided.
For example, if none of the public identities of the subscription is registered in any of the control entities 22 to 24, then the HSS 26 would return the service capabilities to the I-CSCF 31. The I-CSCF 31 may then make the allocation based on the service capabilities data received from the HSS 26 as shown in Figure 1. Upon receiving the query, the HSS 26 checks if the subscription already has a registered public identity. It is possible that the private identity (e.g. a user associated with the subscription) associated with the public identity to be registered does not have any registered public identities while the subscription already has at least one such associated registration. In this case the HSS 26 may send the S-CSCF name to the I-CSCF 31. In other words, the HSS 26 makes the allocation instead of the I-CSCF 31 based on the detection that the identity has a related identity, the relation being through the subscription.

In accordance with an embodiment the HSS 26 is able to recognize that different private identities (IMPIs) having common public identities (IMPUs) belong to a single subscriber. Information regarding the relations between the identities and the service profiles (SPs) may also be analysed. Private identities may be used, for example, for bundling several public identities of a given subscription or a number of user equipment together.

In the example of Figure 4 the two public identities IMPU1 and IMPU3 are totally independent from each other. However, as shown in Figure 4, the two public identities are having a relation via two private identities IMPI1 and IMPI2. The two private identities are also each having a relationship with a third public identity IMPU2. Thus in this example the registration of the two independent public identities in the same S-CSCF can be made due to the common IMPU2.

The build-up of the relationship chain may be done regardless the registration status of the common private identity.

It may happen that the common IMPU is not even registered but the HSS allocates the same S-CSCF to both IMPI1 and IMPI2 in instance where there are two users or one user with two terminals. Nevertheless, both of these users would like to access a common service. The HSS stores information regarding the relations between the identities and is thus able to determine the relation between the two separate IMPls.

Upon the recognition of the relationships between the identities the HSS may only need to send to the I-CSCF the name or other information enabling routing to the already used S-CSCF instead of sending information regarding server capabilities.

In such case, the new identities will be registered at the same S-CSCF than where the existing registrations are.

More particularly, in Figure 3 a user equipment may have requested for registration e.g. by sending a SIP REGISTER message to a proxy server entity 30. The registration request is forwarded from the proxy 30 to an interrogating server entity 31. An appropriate query procedure may then be accomplished between the interrogating server entity 31 and the subscriber information database 35 of the home subscriber server 26.

During the query procedure the HSS 26 may recognise based on the information stored thereof that the identity relates to some other already registered public and/or private identities associated with a subscription. The stored information may describe the relationships between the various identities. An example of various relations two private identities may have is shown in Figure 4. Based on this information the HSS may e.g. recognise that at least one other public identity is registered with the control entity 22 (S-CSCF1). Thus the HSS 26 may return as a response to the query the name or address or other routing information of the S-CSCF1 22 to the I-CSCF 31. The interrogating server 31 may then request for registration from the controller entity 22 based on the returned routing information .

This mechanism may be used to ensure that registrations of all public and/or private IDs utilising the same services take place at the same controller entity. The proposed mechanism may ensure that all IDs belonging to the same subscription or same service profile are registered to the same S-CSCF. Registration at the same servicing control entity enables provision of the same services for a subscriber or a number of subscribers. This can be realised by the storing information about the relationships between the identities in a user information storage and by responding control entity queries by the name or address of the servicing control entity instead of server capabilities information.

It should be appreciated that whilst embodiments of the present invention have been described in relation to user equipment such as mobile stations, embodiments of the present invention are applicable to any other suitable type of users.

The embodiments of the invention were discussed with reference to call state control function entities. Embodiments of the present invention can be applicable to other network elements where applicable.

The embodiment of the present invention has been described in the context of the Universal Mobile Telecommunication System (UMTS) 3G system and session initiation protocol (SIP). This invention is also applicable to any other communication systems and protocols. Examples of other systems, without limiting to these, include the General Packet Radio Service (GPRS), the Enhanced Data rate for GSM Evolution (EDGE) mobile data network, other third generation (3G) telecommunication systems such as the i-phone or IMT-2000 (International Mobile Telecommunications) and the Terrestrial Trunked Radio (TETRA) system.

It is also noted herein that while the above describes exemplifying embodiments of the invention, there are several variations and modifications which may be made to the disclosed solution without departing from the scope of the present invention as defined in the appended claims.

## Claims

1. A method in a communication system wherein a subscription is associated with a plurality of public and private identities (IMPU;IMPI), the method comprising:
storing in a user information storage (HSS) information of relations between the plurality of public and private identities (IMPU,IMPI) and of a control entity (S-CSCF) in which at least one of the identities is registered; and
allocating the control entity (S-CSCF) to a further registration based on the information stored in the user information storage (HSS),
**characterised by** the step of recognising at the user information storage (HSS) that different private identities (IMPI) associate with a common service profile.

2. A method as claimed in claim 1, comprising the further steps of:
querying (UAR) by a further control entity (I-CSCF) for a registration status of a user from the user information storage (HSS); and
responding (UAA) to the query by returning routing information which enables routing of a registration request to the control entity (S-CSCF).

3. A method as claimed in claim 2, wherein the control entity (S-CSCF) comprises a servicing call state control function and the further entity (I-CSCF) comprises an interrogating call state control function.

4. A method as claimed in claim 2 or 3, wherein the information which enables routing to the control entity (S-CSCF) comprises a name of the control entity (S-CSCF).

5. A method as claimed in claim 2 or 3, wherein the information which enables routing to the control entity (S-CSCF) comprises an address of the control entity (S-CSCF).

6. A method as claimed in any preceding claim, comprising selecting at the user information storage (HSS) the control entity (S-CSCF) to be allocated for the further registration.

7. A method as claimed in any preceding claim, comprising the step of recognising at the user information storage (HSS) that the user has an existing registration.

8. A method as claimed in any preceding claim, comprising the step of recognising at the user information storage (HSS) that different private identities (IMPI) associated with a common public identity (IMPU) are associated with a subscription.

9. A method as claimed in any preceding claim, comprising the step of recognising at the user information storage (HSS) that different private identities associate with a common subscription.

10. A method as claimed in any preceding claim, wherein the user information storage (HSS) comprises a home subscriber server.

11. A communication system comprising a plurality of control entities (S-CSCFs) and a user information storage (HSS) configured for storing information of relations between public and private identities (IMPU;IMPI) associated with users of the communication system and of a control entity (S-CSCF) in which at least one of the public and private identities (IMPU;IMPI) is registered, and means for allocating the control entity (S-CSCF) to a further registration associated with a user based on the information stored in the user information storage (HSS), **characterised by** recognising means for recognising at the user information storage (HSS) that different private identities (IMPI) associate with a common service profile.

12. A user information storage (HSS) entity for a communication system, the user information storage (HSS) entity comprising means for storing information of relations between public and private identities (IMPU;IMPI) associated with users of the communication system and of a control entity (S-CSCF) in which at least one of the public and private identities (IMPU;IMPI) is registered, and means for allocating the control entity (S-CSCF) to a further registration associated with a user based on the information stored in the user information storage (HSS), **characterised by** recognising means for recognising at the user information storage (HSS) that different private identities (IMPI) associate with a common service profile.

13. An entity as claimed in claim 12, further comprising querying means for querying (UAR) by a further control entity (I-CSCF) for a registration status of a user from the user information storage (HSS); and
responding means for responding (UAA) to a query by returning routing information which enables routing of a registration request to the control entity (S-CSCF).

14. An entity as claimed in claim 13, wherein the querying means queries by using the further control entity (I-CSCF) which comprises an interrogating call state control function and the control entity (S-CSCF) comprises a servicing call state control function.

15. An entity as claimed in claim 13 or 14, wherein the responding means responds to the query by returning the routing information which enables routing to the control entity (S-CSCF) and comprises a name of the control entity (S-CSCF).

16. An entity as claimed in any of claims 13 to 15, wherein the responding means responds to the query by returning the routing information which enables routing to the control entity (S-CSCF) and comprises an address of the control entity (S-CSCF).

17. An entity as claimed in any of claims 12 to 16, further comprising selecting means for selecting at the user information storage (HSS) the control entity (S-CSCF) to be allocated for the further registration.

18. An entity as claimed in any of claims 12 to 17, further comprising recognising means for recognising at the user information storage (HSS) that the user has an existing registration.

19. An entity as claimed in any of claims 12 to 18, further comprising recognising means for recognising at the user information storage (HSS) that different private identities (IMPI) associated with a common public identity (IMPU) are associated with a subscription.

20. An entity as claimed in any of claims 12 to 19, further comprising recognising means for recognising at the user information storage (HSS) that different private identities (IMPI) associate with a common subscription.

21. An entity as claimed in any of claims 12 to 20, wherein the storing means stores the information in a user information storage (HSS) which comprises a home subscriber server.

## Patentansprüche

1. Verfahren in einem Kommunikationssystem, wobei eine Anmeldung mit einer Mehrzahl von öffentlichen und privaten Identitäten (IMPU; IMPI) verbunden wird, und das Verfahren umfasst:
Speichern in einem Benutzerinformationsspeicher (HSS) von Informationen von Beziehungen zwischen der Mehrzahl von öffentlichen und privaten Identitäten (IMPU; IMPI) und einer Steuerentität (S-CSCF), in welcher wenigstens eine der Identitäten registriert ist; und
Zuordnen der Steuerentität (S-CSCF) zu einer weiteren Registrierung basierend auf den Informationen, die im Benutzerinformationsspeicher (HSS) gespeichert sind,
**gekennzeichnet durch** den Schritt des Erkennens am Benutzerinformationsspeicher (HSS), dass verschiedene private Identitäten (IMPI) zu einem gemeinsamen Dienstprofil gehören.

2. Verfahren nach Anspruch 1, umfassend ferner die folgenden Schritte:
Abfragen (UAR) durch eine weitere Steuerentität (I-CSCF) eines Registrierungsstatus eines Benutzer vom Benutzerinformationsspeicher (HSS); und
Antworten (UAA) auf die Abfrage durch Zurücksenden von Leitweginformationen, welche eine Weiterleitung einer Registrierungsanforderung an die Steuerentität (S-CSCF) ermöglichen.

3. Verfahren nach Anspruch 2, wobei die Steuerentität (S-CSCF) eine bedienende Rufzustandssteuerfunktion umfasst, und die weitere Instanz (I-CSCF) eine befragende Rufzustandssteuerfunktion umfasst.

4. Verfahren nach Anspruch 2 oder 3, wobei die Informationen, welche eine Weiterleitung an die Steuerentität (S-CSCF) ermöglichen, einen Namen der Steuerentität (S-CSCF) umfassen.

5. Verfahren nach Anspruch 2 oder 3, wobei die Informationen, welche eine Weiterleitung an die Steuerentität (S-CSCF) ermöglichen, eine Adresse der Steuerentität (S-CSCF) umfassen.

6. Verfahren nach einem der vorhergehenden Ansprüche, umfassend das Auswählen am Benutzerinformationsspeicher (HSS) der Steuerentität (S-CSCF), die für die weitere Registrierung zuzuordnen ist.

7. Verfahren nach einem der vorhergehenden Ansprüche, umfassend den Schritt des Erkennens am Benutzerinformationsspeicher (HSS), dass der Benutzer eine bestehende Registrierung aufweist.

8. Verfahren nach einem der vorhergehenden Ansprüche, umfassend den Schritt des Erkennens am Benutzerinformationsspeicher (HSS), dass verschiedene private Identitäten (IMPI), die mit einer gemeinsamen öffentlichen Identität (IMPU) verbunden sind, mit einer Anmeldung verbunden sind.

9. Verfahren nach einem der vorhergehenden Ansprüche, umfassend den Schritt des Erkennens am Benutzerinformationsspeicher (HSS), dass verschiedene private Identitäten zu einer gemeinsamen Anmeldung gehören.

10. Verfahren nach einem der vorhergehenden Ansprüche, wobei der Benutzerinformationsspeicher (HSS) einen Heimteilnehmerserver umfasst.

11. Kommunikationssystem, umfassend eine Mehrzahl von Steuerentitäten (S-CSCFS) und einen Benutzerinformationsspeicher (HSS), der so konfiguriert ist, dass er Informationen von Beziehungen zwischen öffentlichen und privaten Identitäten (IMPU; IMPI), die mit Benutzern des Kommunikationssystems verbunden sind, und einer Steuerentität (S-CSCF), in welcher wenigstens eine der öffentlichen und privaten Identitäten (IMPU: IMPI) registriert ist, speichert, und Mittel zum Zuordnen der Steuerentität (S-CSCF) zu einer weiteren Registrierung, die mit einem Benutzer verbunden ist, basierend auf den Informationen, die im Benutzerinformationsspeicher (HSS) gespeichert sind, **gekennzeichnet durch** Erkennungsmittel zum Erkennen am Benutzerinformationsspeicher(HSS), dass verschiedene private Identitäten (IMPI) zu einem gemeinsamen Dienstprofil gehören.

12. Benutzerinformations (HSS)-Enität für ein Kommunikationssystem, wobei die Benutzerinformations (HSS)-Entität umfasst: Mittel zum Speichern von Informationen von Beziehungen zwischen öffentlichen und privaten Identitäten (IMPU; IMPI), die mit Benutzern des Kommunikationssystems verbunden sind, und einer Steuerentität (S-CSCF), in welcher wenigstens eine der öffentlichen und privaten Identitäten (IMPU; IMPI) registriert ist, und Mittel zum Zuordnen der Steuerentität (S-CSCF) zu einer weiteren Registrierung, die mit einem Benutzer verbunden ist, basierend auf den Informationen, die im Benutzerinformationsspeicher (HSS) gespeichert sind, **gekennzeichnet durch** Erkennungsmittel zum Erkennen am Benutzerinformationsspeicher (HSS), dass verschiedene private Identitäten (IMPI) zu einem gemeinsamen Dienstprofil gehören.

13. Entität nach Anspruch 12, ferner umfassend Abfragemittel zum Abfragen (UAR) durch eine weitere Steuerentität (I-CSCF) eines Registrierungsstatus eines Benutzer vom Benutzerinformationsspeicher (HSS); und
Antwortmittel zum Antworten (UAA) auf eine Abfrage durch Zurücksenden von Leitweginformationen, welche eine Weiterleitung einer Registrierungsanforderung an die Steuerentität (S-CSCF) ermöglichen.

14. Entität nach Anspruch 13, wobei das Abfragemittel durch Verwenden der weiteren Steuerentität (I-CSCF) abfragt, welche eine befragende Rufzustandssteuerfunktion umfasst, und die Steuerentität (S-CSCF) eine bedienende Rufzustandssteuerfunktion umfasst.

15. Entität nach Anspruch 13 oder 14, wobei das Antwortmittel auf die Abfrage durch Zurücksenden von Leitweginformationen antwortet, welche eine Weiterleitung an die Steuerentität (S-CSCF) ermöglichen und einen Namen der Steuerentität (S-CSCF) umfassen.

16. Entität nach einem der Ansprüche 13 bis 15, wobei das Antwortmittel auf die Abfrage durch Zurücksenden von Leitweginformationen antwortet, welche eine Weiterleitung an die Steuerentität (S-CSCF) ermöglichen und eine Adresse der Steuerentität (S-CSCF) umfassen.

17. Entität nach einem der Ansprüche 12 bis 16, ferner umfassend Auswählmittel zum Auswählen am Benutzerinformationsspeicher (HSS) der Steuerentität (S-CSCF), die für die weitere Registrierung zuzuordnen ist.

18. Entität nach einem der Ansprüche 12 bis 17, ferner umfassend Erkennungsmittel zum Erkennen am Benutzerinformationsspeicher(HSS), dass der Benutzer eine bestehende Registrierung aufweist.

19. Entität nach einem der Ansprüche 12 bis 18, ferner umfassend Erkennungsmittel zum Erkennen am Benutzerinformationsspeicher(HSS), dass verschiedene private Identitäten (IMPI), die mit einer gemeinsamen öffentlichen Identität (IMPU) verbunden sind, mit einer Anmeldung verbunden sind.

20. Entität nach einem der Ansprüche 12 bis 19, ferner umfassend Erkennungsmittel zum Erkennen am Benutzerinformationsspeicher (HSS), dass verschiedene private Identitäten (IMPI) zu einer gemeinsamen Anmeldung gehören.

21. Entität nach einem der Ansprüche 12 bis 20, wobei das Speichermittel die Informationen in einem Benutzerinformationsspeicher (HSS) speichert, welcher einen Heimteilnehmerserver umfasst.

## Revendications

1. Procédé dans un système de communication dans lequel un abonnement est associé à une pluralité d'identités publiques et privées (IMPU;IMPI), le procédé comprenant :
stocker dans une mémorisation d'informations d'utilisateur (HSS) des informations de rapports entre la pluralité d'identités publiques et privées (IMPU;IMPI) et d'une entité de commande (S-CSCF)dans laquelle au moins une des identités est enregistrée ; et
attribuer l'entité de commande (S-CSCF) à un autre enregistrement en se basant sur les informations stockées dans la mémorisation d'informations d'utilisateur (HSS),
**caractérisé par** l'étape de reconnaissance à la mémorisation d'informations d'utilisateur (HSS) que des identités privées différentes (IMPI) s'associent à un profil de service commun.

2. Procédé selon la revendication 1, comprenant les autres étapes consistant à :
demander des précisions (UAR) par l'intermédiaire d'une autre entité de commande (1-CSCF) sur un statut d'enregistrement d'un utilisateur en provenance de la mémorisation d'informations d'utilisateur (HSS) ; et
répondre (UAA) à la demande de précision en retournant les informations de routage qui permettent le routage d'une demande d'enregistrement à l'entité de commande (S-CSCF).

3. Procédé selon la revendication 2, dans lequel l'entité de commande (S-CSCF) comprend une fonction de commande d'état d'appel de service, et l'autre entité (I-CSCF) comprend une fonction de commande d'état d'appel d'interrogation.

4. Procédé selon la revendication 2 ou 3, dans lequel les informations qui permettent le routage à l'entité de commande (S-CSCF) comprennent un nom de l'entité de commande (S-CSCF).

5. Procédé selon la revendication 2 ou 3, dans lequel les informations qui permettent le routage à l'entité de commande (S-CSCF) comprennent une adresse de l'entité de commande (S-CSCF).

6. Procédé selon l'une quelconque des revendications précédentes, comprenant la sélection à la mémorisation d'informations d'utilisateur (HSS) de l'entité de commande (S-CSCF) à attribuer à l'autre enregistrement.

7. Procédé selon l'une quelconque des revendications précédentes, comprenant l'étape consistant à reconnaître à la mémorisation d'informations d'utilisateur (HSS) que l'utilisateur a un enregistrement existant.

8. Procédé selon l'une quelconque des revendications précédentes, comprenant l'étape consistant à reconnaître à la mémorisation d'informations d'utilisateur (HSS) que des identités privées différentes (IMPI) associées à une identité publique commune (IMPU) sont associées à un abonnement.

9. Procédé selon l'une quelconque des revendications précédentes, comprenant l'étape consistant à reconnaître à la mémorisation d'informations d'utilisateur (HSS) que des identités privées différentes s'associent à un abonnement commun.

10. Procédé selon l'une quelconque des revendications précédentes, dans lequel la mémorisation d'informations d'utilisateur (HSS) comprend un centre numérique d'abonné.

11. Système de communication comprenant une pluralité d'entités de commande (S-CSCFs) et une mémorisation d'informations d'utilisateur (HSS) configurée pour stocker des informations de rapports entre les identités publiques et privées (IMPU;IMPI) associées aux utilisateurs du système de communication et d'une entité de commande (S-CSCF) dans laquelle au moins une des identités publiques et privées (IMPU;IMPI) est enregistrée, et un moyen pour attribuer l'entité de commande (S-CSCF) à un autre enregistrement associé à un utilisateur en se basant sur les informations stockées dans la mémorisation d'informations d'utilisateur (HSS), **caractérisé par** un moyen de reconnaissance pour reconnaître à la mémorisation d'informations d'utilisateur (HSS) que des identités privées différentes (IMPI) s'associent à un profil de service commun.

12. Entité de mémorisation d'informations d'utilisateur (HSS) pour un système de communication, l'entité de mémorisation d'informations d'utilisateur (HSS) comprenant un moyen pour stocker des informations de rapports entre les identités publiques et privées (IMPU;IMPI) associées aux utilisateurs du système de communication et d'une entité de commande (S-CSCF) dans laquelle au moins une des identités publiques et privées (IMPU;IMPI) est enregistrée, et un moyen pour attribuer l'entité de commande (S-CSCF) à un autre enregistrement associé à un utilisateur en se basant sur les informations stockées dans la mémorisation d'informations d'utilisateur (HSS), **caractérisé par** un moyen de reconnaissance pour reconnaître à la mémorisation d'informations d'utilisateur (HSS) que des identités privées différentes (IMPI) s'associent à un profil de service commun.

13. Entité selon la revendication 12, comprenant en plus un moyen de demande de précisions pour demander des précisions (UAR) par l'intermédiaire d'une autre entité de commande (I-CSCF) sur un statut d'enregistrement d'un utilisateur en provenance de la mémorisation d'informations d'utilisateur (HSS) ; et
un moyen de réponse pour répondre (UAA) à une demande de précisions en retournant les informations de routage qui permettent le routage d'une demande d'enregistrement à l'entité de commande (S-CSCF).

14. Entité selon la revendication 13, dans laquelle le moyen de demande de précisions demande des précisions par l'utilisation de l'autre entité de commande (I-CSCF), qui comprend une fonction de commande d'état d'appel d'interrogation et de l'entité de commande (S-CSCF), qui comprend une fonction de commande d'état d'appel de service.

15. Entité selon la revendication 13 ou 14, dans laquelle le moyen de réponse répond à la demande de précisions en retournant les informations de routage qui permettent le routage à l'entité de commande (S-CSCF) et comprennent un nom de l'entité de commande (S-CSCF).

16. Entité selon l'une quelconque des revendications 13 à 15 dans laquelle le moyen de réponse répond à la demande de précisions en retournant les informations de routage qui permettent le routage à l'entité de commande (S-CSCF) et comprennent une adresse de l'entité de commande (S-CSCF).

17. Entité selon l'une quelconque des revendications 12 à 16, comprenant en plus un moyen de sélection pour sélectionner à la mémorisation d'informations d'utilisateur (HSS) l'entité de commande (S-CSCF) à attribuer à l'autre enregistrement.

18. Entité selon l'une quelconque des revendications 12 à 17, comprenant en plus un moyen de reconnaissance pour reconnaître à la mémorisation d'informations d'utilisateur (HSS) que l'utilisateur a un enregistrement existant.

19. Entité selon l'une quelconque des revendications 12 à 18, comprenant en plus un moyen de reconnaissance pour reconnaître à la mémorisation d'informations d'utilisateur (HSS) que des identités privées différentes (IMPI) associées à une identité publique commune (IMPU) sont associées à un abonnement.

20. Entité selon l'une quelconque des revendications 12 à 19, comprenant en plus un moyen de reconnaissance pour reconnaître à la mémorisation d'informations d'utilisateur (HSS) que des identités privées différentes (IMPI) s'associent à un abonnement commun.

21. Entité selon l'une quelconque des revendications 12 à 20, dans laquelle le moyen de stockage stocke les informations dans une mémorisation d'informations d'utilisateur (HSS), qui comprend un centre numérique d'abonné.
